# EUROPEAN PATENT SPECIFICATION

(11) **EP 1 332 957 B1**
(45) Date of publication and mention of the grant of the patent: **10.09.2008**
(21) Application number: 03001546.5
(22) Date of filing: 23.01.2003
(51) Int. Cl.: B62J 6/04, B60Q 1/44, B60Q 1/26, F21Y 101/02, F21W 101/027

(54) **Vehicle taillight**
Heckleuchte für Kraftfahrzeug
Feu arrière pour véhicule

(30) Priority: 31.01.2002 JP 2002024126
(43) Date of publication of application: 06.08.2003
(73) Proprietor: HONDA GIKEN KOGYO KABUSHIKI KAISHA, Minato-ku Tokyo (JP)
(72) Inventor: Murakami, Kazuhiro, Wako-shi, Saitama (JP); Ase, Yukimi, Wako-shi, Saitama (JP); Katagiri, Kiyoshi, Wako-shi, Saitama (JP)
(74) Representative: Liska, Horst

(56) References cited:
- EP-A- 0 531 184
- EP-A- 0 980 788
- GB-A- 2 348 324
- US-A- 5 519 596
- US-A- 5 594 424

## Description

The present invention relates to an improvement of a vehicle taillight.

An attempt to employ a light-emitting diode (LED) as a light source of a taillight is made, and in Fig. 1 in the publication of Japanese Patent No.2863926, entitled "TAILLIGHT DEVICE FOR MOTORCYCLES", for example, a taillight device 6 of two-tiered structure including a taillight unit 6T on the lower part and a stop lamp unit 6S on the upper part is shown. A bulb 9 is employed for the taillight unit 6T and a number of light-emitting diodes 10 are employed for the stop lamp unit 6S. The bulb 9 in the taillight unit 6T is lighted by closing the light switch, and the light-emitting diodes 10 in the stop lamp unit 6S are lighted when braking operation is made.

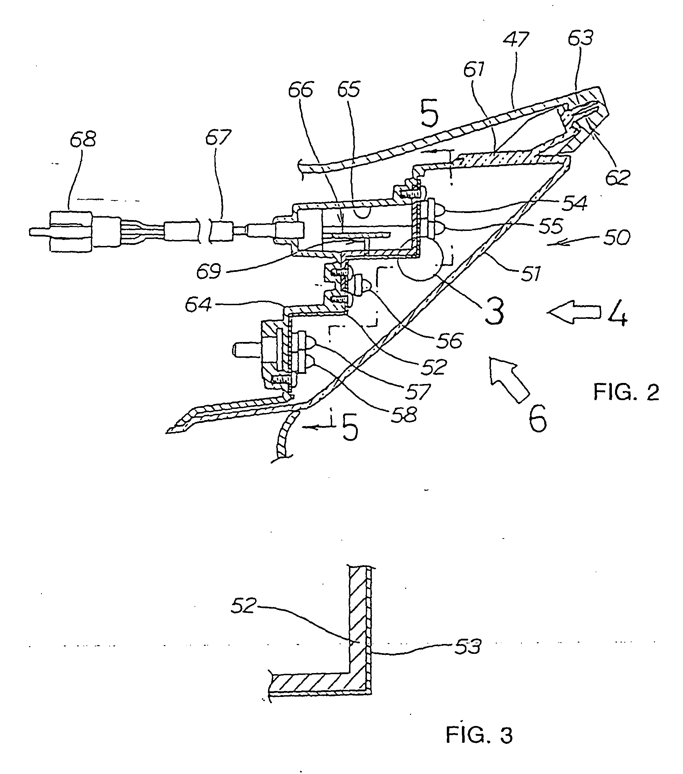

As shown in Fig. 2 in the above-described publication, the light-emitting diodes 10 are simply and densely arranged on a grid in order to cover the stop light unit 6S of laterally elongated rectangular shape and to obtain a required amount of light, and there is no specific consideration in design.

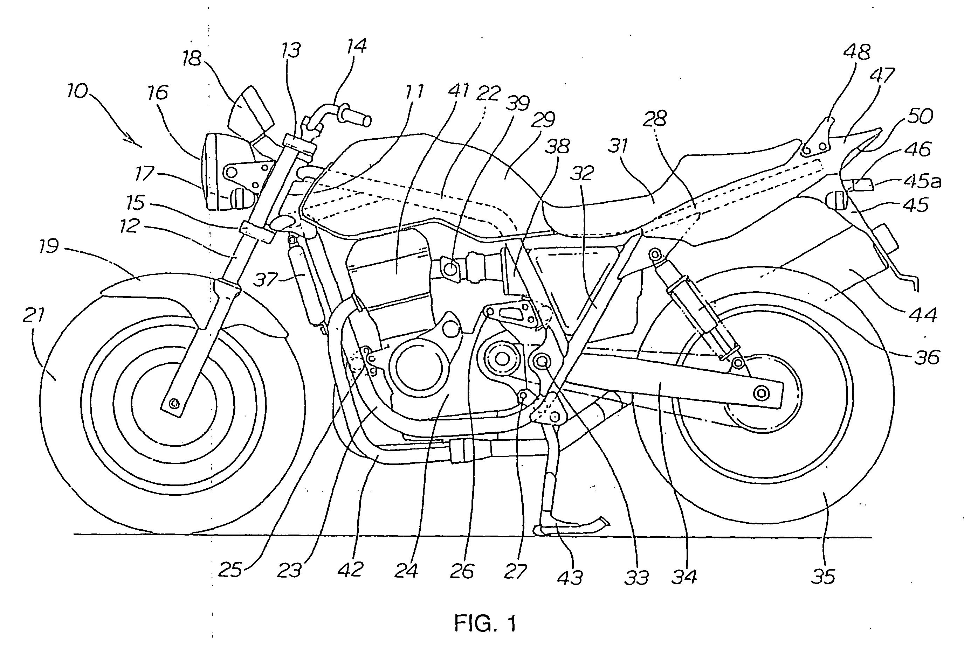

In addition, as shown in Fig. 1 in the same publication, since the light-emitting diodes 10 are mounted on a relatively thick base 17, the plurality of light-emitting diodes 10 are obliged to be arranged along a substantially vertical plane. Therefore, the light-emitting diodes 10 are forced to be arranged in a simple manner as also shown in Fig. 2, and thus it is hard to say that the taillight in the same publication has a construction in which the shape can be determined as desired.

EP 05 311 184 A discloses a vehicle in accordance with the preamble of claim 1. There, the orientation of the lens relative to the vehicle is not disclosed. Further, the surface of the base portion which faces the lens is not a reflector.

EP 0 980 788 A shows a vehicle taillight with LEDs mounted on a stepped base to have substantially the same distances to the lens. The steps of the base portion are sequentially staggered in the lateral direction of the vehicle.

US 5,519,596 shows an LED array for a vehicle taillight mounted on a stepped base without disclosing the orientation of the LED array relative to the vehicle.

Accordingly, an object of the present invention is to provide a technique for enabling free determination of the shape of the taillight in which the light-emitting diodes are employed.

In order to achieve the above-described object, there is provided a motorcycle taillight as set forth in Claim 1.

The taillight includes a lens being generally inclined longitudinally of the motorcycle in such a manner that the upper portion is positioned rearward and the lower portion is positioned frontward and having a lens-cut surface of a predetermined shape, a stepped base being formed in a staircase pattern for more or less equalizing the distance to the lens and having an almost the same outer diameter as the lens-cut surface in rear view, a reflection surface formed on the rear surface of the stepped base, and a plurality of light-emitting diodes mounted on such stepped base so as to be more or less equal in distance to the lens.

Since the stepped base is employed, the thickness of the taillight in the direction orthogonal to the lens may be reduced,
and in the motorcycle, an effective utilization of a space in the rear portion of the motorcycle may be realized. Since a plurality of light-emitting diodes are disposed at an almost equal distance from the lens, the brightness on the lens surface may be uniformized.

Since the lens may be inclined longitudinally of the motorcycle, diversification of the shape of the taillight may be achieved, and the flexibility in design may be increased. In addition, since the taillight is constructed of a stepped base mounted with a lens and light-emitting diodes, the number of components may be reduced and thus the number of steps for assembling the taillight may easily be reduced.
Fig. 1 is a left side view of a vehicle provided with a taillight according to the present invention.
Fig. 2 is a cross sectional view of the vehicle taillight according to the present invention.
Fig. 3 is an enlarged view of the portion indicated by numeral 3 in Fig. 2.
Fig. 4 is a drawing viewed in the direction indicated by an arrow 4 in Fig. 2.
Fig. 5 is a drawing viewed in the direction indicated by arrows 5-5 in Fig. 2.
Fig. 6 is a drawing viewed in the direction indicated by an arrow 6 in Fig. 2.
Fig. 7 is a comparative drawings of the taillight.

Referring now to the drawings, an embodiment of the present invention will be described. The drawings are to be viewed as reference numerals are seen in the right way.

Fig. 1 is a left side view of a motorcycle provided with a taillight according to the present invention. The motorcycle 10 as a vehicle is constructed by mounting a front fork 12 on a head pipe 11 so as to be capable of turning, mounting a steering handle 14 on a top bridge 13 of the front fork 12, mounting a headlight 16, a front winker 17 and meters 18 between the top bridge 13 and a bottom bridge 15 on the front side via a bracket, mounting a front fender 19 and a front wheel 21 at the lower portion of the front fork 12, providing a main frame 22 as a vehicle frame so as to extend rearward from the head pipe 11, providing a down tube 23 so as to extend rearward from obliquely below, interposing an engine 24 between the main frame 22 and the down tube 23, holding the engine 24 on the vehicle frame at three points of a front mounting point 25, an upper rear mounting point 26, and an lower rear mounting point 27, providing a seat rail 28 so as to extend rearward from the main frame 22, mounting a fuel tank 29 and a tandem seat 31 in sequence thereon, providing a sub frame 32 so as to extend from the down tube 23 to the seat rail 28, providing a rear swing arm 34 so as to extend from the lower rear portion of such vehicle body frame via a pivot 33, mounting a rear wheel 35 at the rear end of the rear swing arm 34 so as to be capable of rotation freely, and providing a rear cushion 36 between the rear portion of the rear swing arm 35 and the vehicle body frame (at the joint between the sub frame 32 and the seat rail 28).

Reference numeral 37 designates a radiator, numeral 38 designates an air cleaner, numeral 39 designates a throttle valve, numeral 41 designates a cylinder head, numeral 42 designates an exhaust pipe, numeral 43 designates a main stand, numeral 44 designates a silencer, numeral 45 designates a rear fender, numeral 45a designates a license light, numeral 46 designates a rear winker, numeral 47 designates a rear cowl, and numeral 48 designates a handrail.

Reference numeral 50 designates a taillight, and the detailed description of the taillight 50 will be made below.

Fig. 2 is a cross sectional view of a vehicle taillight according to the present invention. Left side of the figure is the front, and the right side of the figure is the rear of the vehicle.

The taillight 50 includes a lens 51 generally inclined longitudinally of the vehicle in such a manner that the upper portion is positioned rearward, and the lower portion is positioned forward, a stepped base 52 bent in a staircase pattern or of three-piece construction for being laid almost in parallel with the lens 51, a reflecting surface (indicated by numeral 53 in Fig. 3) formed on the rear surface of the stepped base 52, and a plurality of light-emitting diodes 54-58 mounted on such stepped base 52 in almost parallel with the lens 51.

When the three-piece construction is employed for the stepped base 52, vertical surfaces must simply be provided and horizontal surfaces may be omitted. As a consequence, the stepped base 52 may be constructed only of a plurality of (three, when it is three-piece construction) laterally elongated plates. Since the horizontal surfaces may not be provided, material may be saved correspondingly, and it may easily be manufactured, thereby reducing the costs.

By providing an angular projection 62 from an upper surface 61 of the lens 51 and inserting the angular projection 62 into a recess 63 formed within a rear cowl 47 in advance, positioning and mounting of the upper surface 61 may be achieved. Such lens 51 forms a substantially hermetical space by being joined up with a case 64, which also has a stepped cross section. The case 64 is a molded article integrally provided with a pocket portion 65. Flashing and switching of brightness of the light-emitting diodes 54-58 may be controlled by integrating a main base 66 in the pocket portion 65, providing a harness 67 so as to extend from the main base 66, attaching a coupler 68 at the extremity thereof, and coupling the coupler 68 with a coupler extending from the controller such as an on-vehicle computer, not shown. More specifically, in this embodiment, the identical light-emitting diodes 54-58 are also used for a taillight and for a stop lamp by switching the brightness thereof. When they are used for a stop lamp, the brightness is increased than the case where they are used for a taillight, so that they are lighted more brightly.

Reference numeral 69 designates a sub harness for electrically connecting the main base 66 and the stepped base 52. In this embodiment, a circuit required for the taillight may be formed separately on the main base 66 and on the stepped base 52. For example, a main circuit, the diodes, a transistor, resistances, and so on are mounted on the main base 66 in a concentrated manner, and only a power dispatching circuit for the light-emitting diodes 54-58 is provided on the stepped base 52. As a consequence, by forming the stepped base 52 of a metal plate and plating on the rear surface, the base itself may be used as a reflecting surface.

Fig. 3 is an enlarged view of a part indicated by numeral 3 in Fig. 2. The stepped base 52 is preferably formed by bending a copper (Cu) plate, which is a good conductor and a good thermal conductor, and glossy metal such as chromium (Cr) is plated or deposited on the rear surface thereof for forming a reflecting surface 53. Since the base 52 is formed of a good thermal conductor, even when the temperature in the hermetically closed space becomes high, the heat may be released quickly to the outside. However, since the light-emitting diodes 54-58 have lower heat generating property than a normal bulb, it is also possible to form the stepped base 52 of resin and form a circuit thereon if it is not necessary to consider about heat.

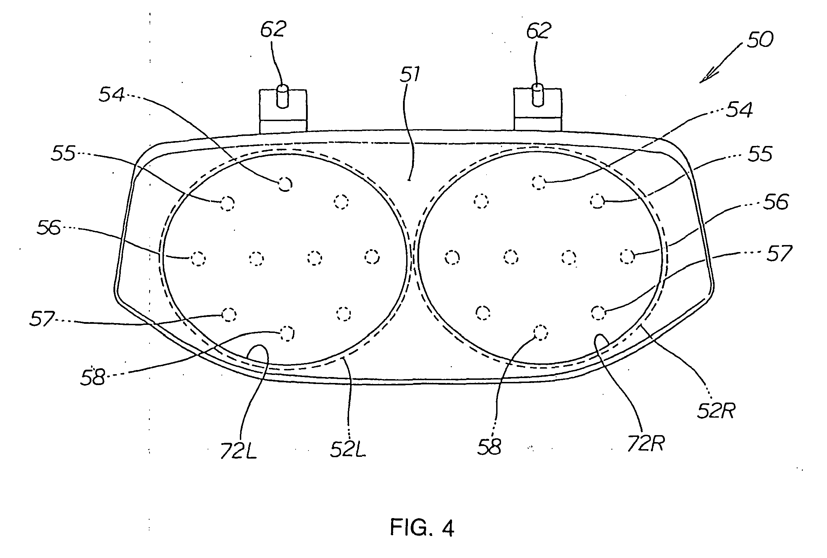

Fig. 4 is a drawing view in the direction indicated by an arrow 4 in Fig. 2, showing the taillight 50 viewed horizontally from the rear of the vehicle (hereinafter referred to as a rear view). The lens 51 is formed with a pair of left and right approximately circular lens cut surfaces 72L, 72R (L indicates the left and R indicates the right from the rider, hereinafter), and stepped bases 52L, 52R in almost the same contour as the lens cut surfaces 72L, 72R may be seen in an overlapped manner.

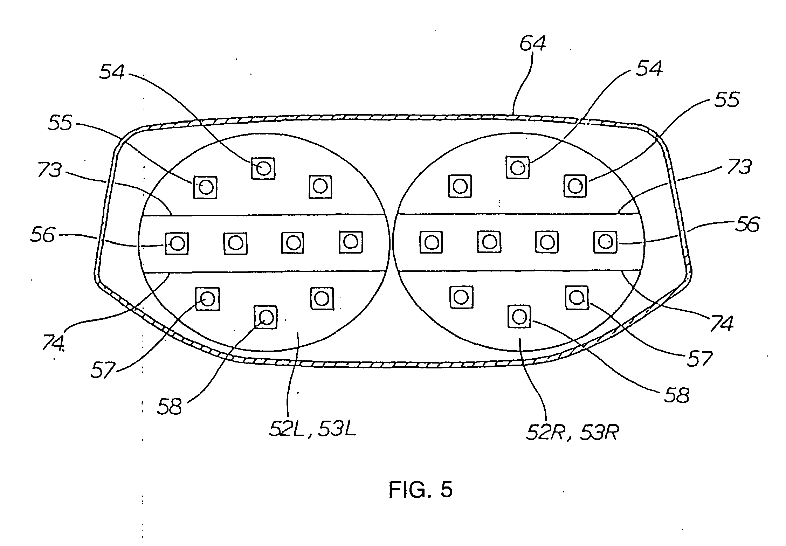

Fig. 5 is a drawing taken along the line 5-5 in Fig. 2, and the stepped bases 52L, 52R disposed in a substantially hermetical space are almost round shape having outer diameters as the lens cut surfaces 72L, 72R shown in Fig. 4. Reference numerals 73, 74 are step lines. The figure shows that ten light-emitting diodes 54-58 are uniformly and dispersedly disposed on the substantially circular stepped base 52 and reflecting surfaces 53L, 53R.

Therefore, according to the construction shown in Fig. 4, the lens cut surfaces 72L, 72R radiate uniformly. Since the reflecting surfaces are provided only on the stepped bases 52L, 52R, the portion other than the lens cut surfaces 72L, 72R are relatively dark, and thus the pair of left and right lens cut surfaces 72L, 72R radiates outstandingly.

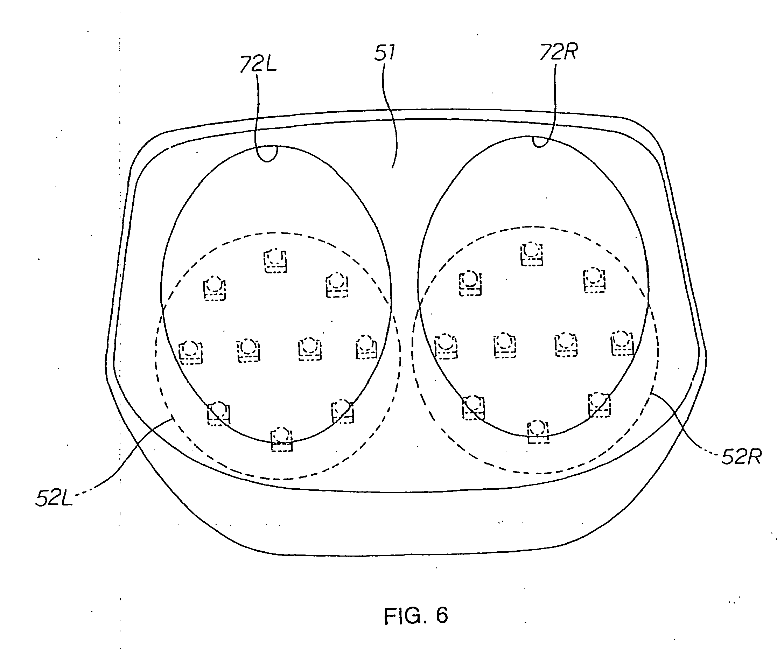

Fig. 6 is a drawing viewed in the direction of an arrow 6 in Fig. 2, showing that the lens 51 itself has vertically elongated oblong lens cut surfaces 72L, 72R. Although the stepped bases 52L, 52R are shown by broken lines just for reference, they are not accurately drawn in the figure.

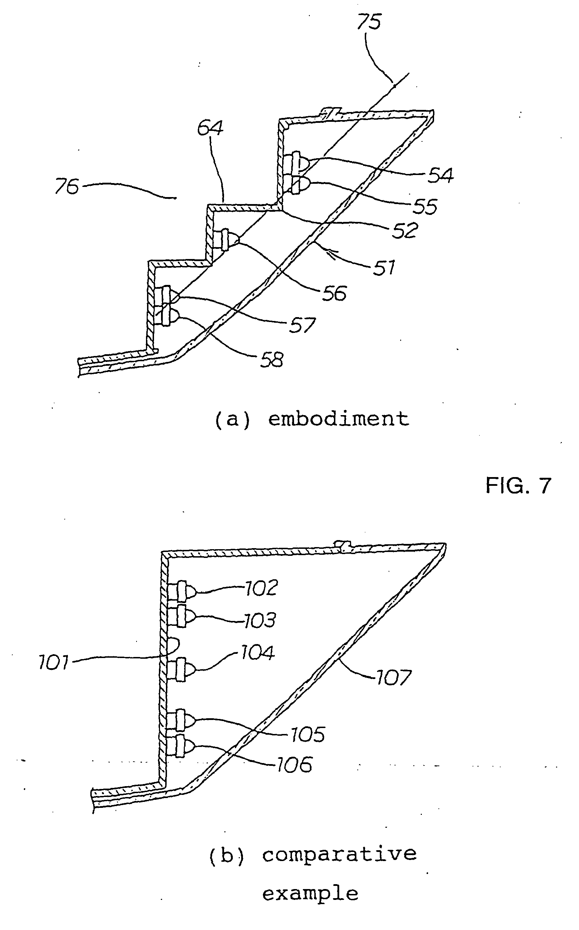

Fig. 7(a) and (b) are comparative drawings of the taillight.

Fig. 7(a) shows the embodiment of the present invention, that is, a diagrammatic sketch corresponding to Fig. 2, showing that the light-emitting diodes 54-58 are disposed along a line 75 almost in parallel with the lens 51. Since the distances from the light-emitting diodes 54-58 to the lens 51 are almost the same, brightness over the lens 51 is uniform.

Fig. 7(b) shows a comparative example, wherein light-emitting diodes 102-106 are disposed on a vertically oriented flat base 101, and an inclined type lens 107 is mounted thereon. In this example, the brightness is apt to be non-uniform in such a manner that the upper portion of the lens 107 far from the light-emitting diodes 102, 103 is darker, and the lower portion of the lens 107 near the light-emitting diodes 105, 106 is brighter. Such non-uniformity in brightness may be resolved by increasing brightness of the light-emitting diodes 102, 103 and decreasing brightness of the light-emitting diodes 105, 106 by control. However, in this case, a control circuit for this purpose is additionally required.

In this regard, in the example shown in Fig. 7(a), a uniform brightness may easily be maintained, and thus it is not necessary to provide a complex control circuit. In addition, a large space 76 may be secured behind the case 64, and thus on-vehicle components such as electrical equipment may be disposed in this space 76 or this space may be utilized as a small compartment.

The invention refers to a motorcycle which is limited in storage space in the rear cowl.

Although the structure of a base 101 in a comparative example shown in the figure (b) is simple, the upper portion of the lens becomes dark since a light-emitting diodes 102, 103 are far from the lens 107, while the lower portion of the lens becomes brighter since the light-emitting diodes 105, 106 are close to the lens 107. The brightness over the surface of the lens 107 is apt to be non-uniform.

The figure (a) shows the present invention, which is adapted to provide a uniform brightness over a lens 51 by disposing light-emitting diodes 54-58 in substantially parallel with the inclined lens 51. In order to do so, the base for supporting the light-emitting diodes 54-58 is formed into a stepped base 52, and a reflecting surface is provided on the rear surface of the stepped base 52.

## Claims

1. Vehicle having a taillight comprising:
an inclined lens (51) having a lens-cut surface (72L, 72R) of a predetermined shape;
a stepped base (52) formed in a staircase pattern for more or less equalizing the distance to the lens (51); and
a plurality of light-emitting diodes (54-58) mounted on the stepped base so as to be more or less equal in distance to the lens (51),
**characterized in that** the vehicle is a motorcycle;
that the taillight is mounted on the motorcycle in such a manner that the lens (51) is generally inclined longitudinally of the motorcycle with the upper portion of the lens (51) positioned rearward and the lower portion of the lens (51) positioned frontward;
that, within the outer contour of the lens (51), the lens-cut surface (72L, 72R) is delimited to an approximately circular shape in rear view while the stepped base (52) has almost the same outer diameter or contour as the lens-cut surface (72L, 72R) in rear view; and
that a reflection surface (53, 53L, 53R) is formed on the rear surface of the stepped base (52).

2. Vehicle according to claim 1, wherein an angular projection (62) provided from an upper surface (61) of the lens (51) of the taillight is inserted into the recess (63) formed within a rear cowl (47) of the motorcycle.

## Patentansprüche

1. Fahrzeug mit einer Heckleuchte, welche umfasst:
eine geneigte Scheibe (51), deren Scheibenschnittfläche (72L, 72R) eine vorbestimmte Form hat;
eine gestufte Basis (52), die in einem Treppenmuster ausgebildet ist, um den Abstand zur Scheibe (51) mehr oder weniger anzugleichen; und
eine Mehrzahl von Licht emittierenden Dioden (54-58), die mit mehr oder weniger gleichem Abstand zur Scheibe (51) an der gestuften Basis angebracht sind,
**dadurch gekennzeichnet, dass** Fahrzeug ein Kraftrad ist;
dass die Heckleuchte an dem Kraftrad derart angebracht ist, dass die Scheibe (51) allgemein längs des Kraftrads geneigt ist, wobei der obere Abschnitt der Scheibe (51) hinten angeordnet ist und der untere Abschnitt der Scheibe (51) vorne angeordnet ist;
dass, innerhalb der Außenkontur der Scheibe (51), die Scheibenschnittfläche (72L, 72R) in Rückansicht auf eine angenäherte Kreisform begrenzt ist, während die gestufte Basis in Rückansicht allgemein den gleichen Außendurchmesser oder die gleiche Kontur wie die Scheibenschnittfläche (72L, 72R) hat; und
dass eine Reflektionsoberfläche (53, 53L, 53R) auf der Rückseite der gestuften Basis (52) ausgebildet ist.

2. Fahrzeug nach Anspruch 1, worin ein gewinkelter Vorsprung (62), der an einer Oberseite (61) der Scheibe (51) der Heckleuchte vorgesehen ist, in die Vertiefung (63) eingesetzt ist, die innerhalb einer Heckverkleidung (47) des Kraftrads ausgebildet ist.

## Revendications

1. Véhicule présentant un feu arrière comprenant :
une lentille inclinée (51) présentant une surface de découpe de lentille (72L, 72R) d'une forme prédéterminée ;
une base étagée (52) formée dans un motif en escalier pour égaliser plus ou moins la distance par rapport à la lentille (51) ; et
une pluralité de diodes électroluminescentes (54-58) montées sur la base étagée de manière à être plus moins à distance égale par rapport à la lentille (51),
**caractérisé en ce que** le véhicule est un motocycle ;
**en ce que** le feu arrière est monté sur le motocycle de telle manière que la lentille (51) est généralement inclinée dans le sens longitudinal du motocycle avec la partie supérieure de la lentille (51) positionnée à l'arrière et la partie inférieure de la lentille (51) positionnée à l'avant ;
**en ce que**, à l'intérieur du contour externe de la lentille (51), la surface de découpe de lentille (72L, 72R) est délimitée par rapport à une forme à peu près circulaire en vue arrière tandis que la base étagée (52) présente presque le même diamètre ou contour externe que la surface de découpe de lentille (72L, 72R) en vue arrière ; et
**en ce qu'**une base de réflexion (53, 53L, 53R) est formée sur la surface arrière de la base étagée (52).

2. Véhicule selon la revendication 1, dans lequel une projection angulaire (62) prévue depuis une surface supérieure (61) de la lentille (51) du feu arrière est insérée à l'intérieur de l'évidement (63) formée avec un auvent arrière (47) du motocycle.
